# EUROPÄISCHE PATENTSCHRIFT

(11) **EP 0 398 876 B1**
(45) Veröffentlichungstag und Bekanntmachung des Hinweises auf die Patenterteilung: **29.12.1993**
(21) Anmeldenummer: 88908675.7
(22) Anmeldetag: 13.10.1988
(51) Int. Cl.: H04Q 3/545

(54) **VERFAHREN ZUR IDENTIFIZIERUNG VON PERIPHEREN EINRICHTUNGEN**
PROCESS FOR IDENTIFYING PERIPHERAL DEVICES
PROCEDE POUR IDENTIFIER DES PERIPHERIQUES

(30) Priorität: 12.02.1988 DE 3804819
(43) Veröffentlichungstag der Anmeldung: 28.11.1990
(73) Patentinhaber: SIEMENS AKTIENGESELLSCHAFT, 80333 München (DE)
(72) Erfinder: KEMP, Christopher, D-4600 Dortmund 14 (DE); KNAAK, Uwe, D-4350 Recklinghausen (DE)
(86) Internationale Anmeldenummer: DE8800641
(87) Internationale Veröffentlichungsnummer: WO8907870

(56) Entgegenhaltungen:
- EP-A- 0 231 630
- DE-A- 3 329 556
- Telesis, Band 12, Nr. 3, 1985 (Ottawa, CA); N. Asam et al.: "The meridian DV-1: system architecture", Seiten 13-19
- IEEE Journal on Selected Areas in Communications, Band SAC-4, Nr. 8, November 1986, IEEE (New York, US); H.-S. Liu et al.: "A working research prototype of an ISDN central office", Seiten 1241-1250

## Beschreibung

Die Erfindung betrifft ein Verfahren zur Identifizierung von peripheren Einrichtungen innerhalb eines digitalen Kommunikationssystems, insbesondere einer Nachrichtenvermittlungsanlage, mit einem zentralen Datenprozessor als Zentralsteuerung und mit mehreren, als Teilnehmer- und Leitungssatz mit Speicher ausgestatteten die peripheren Einrichtungen steuernde, dezentralen Ein-Ausgabeprozessoren, die jeweils über eine periphere Schnittstelleneinrichtung mit dem zentralen Datenprozessor in Verbindung stehen, wobei für die Identifizierung der Ein-Ausgabeprozessoren bzw. peripheren Schnittstelleneinrichtungen eine Satztypinformation und für die Ansteuerung der Ein-Ausgabeprozessoren bzw. peripheren Schnittstelleneinrichtungen Satzadressen vorgesehen sind.

Derartig definierte Kommunikationssysteme stellen modular aufgebaute Nebenstellenanlagen mit wenigen Standardschnittstellen dar, die entsprechend der zu erfüllenden Aufgaben in unterschiedlichsten Anlagengrößen aufgebaut sind. Diese Nachrichtenvermittlungsanlagen als Nebenstellenanlagen können sowohl an öffentliche Netze und Dienste - Fernsprechnetz, Teletextnetz etc. - als auch an private Netze - Unteranlagen, Querverbindungsleitungen - angeschlossen sein. Als Teilnehmeranschlüsse sind analoge und digitale Endgeräte vorgesehen. Außerdem besteht über entsprechende Schnittstellen eine zusätzliche Anschlußmöglichkeit von externen Geräten, wie Drucker, betriebstechnische Terminals (PC) usw..

Aus der europäischen Patentanmeldung EP-A-0 231 630 ist ein modular aufgebautes Übertragungssystem bekannt, bei der für die Identifizierung des Typs von dezentralen Prozessoren eine Satztypinformation und zur gezielten Ansteuerung der Prozessoren durch das Betriebssystem Satzadressen vorgesehen sind. Die Satzadressen werden nach dem Aktivieren der dezentralen Prozessoreinrichtungen durch das Betriebssystem übertragen. Die latent in den dezentralen Prozessoren gespeicherten Satztypinformationen werden nach dem Aktivieren durch das Betriebssystem gelesen.

Aus einer weiteren Druckschrift, Telesis, Band 12 (1985), Nr. 3, Seiten 13 bis 15, 'The Meridian DV-1-Systems', ist bekannt, daß in einem Übertragungssystem von einzelnen Hardware-Modulen nach dem Aktivieren eine codierte Information zur Systeminitialisierung ausgesandt wird, wobei die codierte Information einer Satzadresse vergleichbar und in einem ROM-Speicher enthalten ist. Das Hardware-Modul wird nach dem Aussenden der codierten Information mit der Betriebssoftware und anschließend mit weiteren vorgegebenen Adressen geladen. Ist das Hardware-Modul mit der Betriebssoftware geladen, so registriert es sich selbst durch Aussenden von wenigen bestimmten Adressen. Durch die bestimmten Adressen ist die Lage für die jeweiligen Hardware-Module fest vorgegeben und damit eine Freizügigkeit in der Belegung der Einbauplätze nicht gegeben.

Die Systemarchitektur der unterschiedlichen Kommunikationssysteme ist einheitlich in drei Ebenen strukturiert:
Peripherie, dezentrale Ein-Ausgabeprozessoren und zentraler Datenprozessor.
Zur Peripherie gehören danach Baugruppen als Schnittstellen zu den angeschalteten Endgeräten und Leitungen (Teilnehmersätze, Leitungssätze) und Baugruppen für den Verbindungsaufbau, wie Signalisierungseinrichtungen, Sender und Empfänger.

Dabei wird die zeitkritische Bearbeitung der Peripherie durch die dezentralen Ein-Ausgabeprozessoren übernommen, wobei die Anzahl der peripheren Einrichtungen bzw. die der Anschlußeinheiten für jeden Ein-Ausgabeprozessor in Abhängigkeit der maximal zu verarbeitenden Gesamtdatenmenge begrenzt ist. Die Ein-Ausgabeprozessoren sind somit unter anderem für die Steuerung der Standardschnittstellen und lokale Busse, der Ziffernauswertung, der Anschaltung von Ton- und Ruftakten und der sicherheitstechnischen Anzeigen vorgesehen.
Der dezentrale Datenprozessor dagegen koordiniert die Steuerung sämtlicher im Kommunikationssystem vorhandener Einrichtungen über entsprechede Busverbindungen. Außerdem werden vom zentralen Datenprozessor die Rücksetz-Logig und sicherheitstechnische Vorgänge zentral gesteuert.

Die Schnittstelle zwischen dem dezentralen Ein-Ausgabeprozessor und dem zentralen Datenprozessor wird durch einen Speicher ermöglicht, der von beiden Prozessoren beschrieben und ausgelesen werden kann. Die Steuerung dieses Speichers erfolgt üblicherweise durch das eingesetzte Betriebssystem.

Wie bereits erwähnt, sind die Nachrichtenvermittlungsanlagen in unterschiedlichsten Anlagengrößen aufgebaut, so daß bei optimaler Auslegung des benötigten Platzbedarfs die unterschiedlichsten peripheren Einrichtungen, insbesondere hinsichtlich ihrer in den verschiedenen Anlagen unterschiedlichen Anzahl, nicht immer fest vorgeplanten Einbauplätzen zugeordnet werden können. Dies hat zur Folge, daß das jeweilig benutzte Betriebssystem an die unterschiedlichen Anlagenkonfigurationen, insbesondere im Hinblick auf die unterschiedlichen Adressierungen der peripheren Einrichtungen, jeweils angepaßt werden muß. Die der Erfindung zugrunde liegende Aufgabe besteht darin, diese kostenintensiven Anpassungen der Betriebssysteme an die verschiedenen Anlagengrößen der Kommunikationssysteme zu vermeiden und mit möglichst geringen materiellen Aufwand ein von der Anlagenkonfiguration weitestgehend unabhängiges Betriebssystem zu schaffen, mit dem sowohl die räumliche Anwesenheit der peripheren Einrichtungen festgestellt als auch die Funktionsfähigkeit derselben ermöglicht werden kann.
Erfindungsgemäß wird dies dadurch erreicht,
daß mit dem Aktivieren einer peripheren Einrichtung deren Schnittstelleneinrichtung und deren Ein-Ausgabeprozessor durch ein Rücksetz-Signal zurückgesetzt wird,
daß dem Ein-Ausgabeprozessor zur Identifizierung der peripheren Einrichtungen durch ein Byte 0 die Satzadresse, durch ein Byte 1 die Satztypinformation und durch weitere Bytes 2, 3 eine der peripheren Einrichtung entsprechende Speicherkapazitätskennung übertragen wird,
daß die Satzadresse, die Satztypinformation und die Speicherkapazitätskennung dem zentralen Datenprozessor über den Datenbus der Schnittstelleneinrichtung als Speicher-Ladeabrufsignal übertragen werden,
daß das Speicher-Ladeabrufsignal im zentralen Datenprozessor das Aussenden einer satzindividuellen Speicher-Ladeinformation bewirkt, die über den Datenbus zur Schnittstelleneinrichtung in den Speicher der jeweiligen peripheren Einrichtung übertragbar ist,
und daß die Speicher-Ladeinformation vom jeweiligen dezentralen Ein-Ausgabeprozessor durch eine im zentralen Datenprozessor speicherbare Aktiv-Rückmeldeinformation quittiert wird.

Mit diesem Verfahren ist erreicht, daß der zentrale Datenprozessor unmittelbar mit der Aktivierung der peripheren Einrichtungen, d. h. nach dem Stecken dieser Einrichtungen in eine entsprechende Einrichtungsaufnahme der Nachrichtenvermittlungsanlage und/oder bei Spannungseinschaltung, die Satz-Adresse, die Satztypinformation und die vorhandene Speicherkapazität der jeweiligen peripheren Einrichtung übermittelt bekommt. Der zentrale Datenprozessor kann daraufhin für jede periphere Einrichtung - unabhängig von deren Einbauplatz - die spezielle Speicher-Ladeinformation übermitteln und mit der daraufhin übertragenen Aktiv-Rückmeldeinformation sowohl die Funktionsfähigkeit der entsprechenden peripheren Einrichtung als auch deren räumliche Anwesenheit innerhalb der Einrichtungsaufnahme feststellen. Mit dem Empfang der Speicherkapazitätskennung als Teil des Speicher-Ladeabrufsignals, also mit der Mitteilung, welche Speicherkapazität die jeweilige periphere Einrichtung enthält, kann der Datenprozessor außerdem die Speicher-Ladeinformation entsprechend anpassen und durch Abspeicherung dieser Information den zur Funktion der periphernen Einrichtung erforderlichen Datenfluß entsprechend steuern.
Als wesentlich für die Erfindung ist anzusehen, daß sämtliche Verfahrensschritte zur Identifizierung der peripheren Einrichtungen durch bereits in den Teilnehmer- und Leitungs-Sätzen vorhandene Schalteinrichtungen vorgenommen werden können und somit kein zusätzlicher Bedarf und materieller Aufwand für diese peripheren Einrichtungen notwendig wird.

Gemäß einer vorteilhaften Ausgestaltung der Erfindung ist vorgesehen, daß das Aktivieren der peripheren Einrichtung und ein erfolgreicher Abschluß des Ladezustandes mit der Aktiv-Rückmeldeinformation durch eine einrichtungsindividuelle Anzeigeeinrichtung anzeigbar ist. Damit kann unmittelbar nach der Inbetriebnahme der peripheren Einrichtung deren Funktionsfähigkeit innerhalb des Kommunikationssystems optisch angezeigt werden.

Eine weitere vorteilhafte Ausgestaltung der Erfindung sieht vor, daß die einrichtungsindividuelle Anzeigeeinrichtung durch eine manuelle Sperreinrichtung der jeweiligen peripheren Einrichtung beeinflußbar ist und somit unabhängig vom Betriebssystem durch manuelle Eingriffe periphere Einrichtungen wirksam gesperrt werden können. Manuell steuerbare Sperrmaßnahmen sind denkbar bei Funktionsstörungen oder in Testfällen.

Zusätzlich kann die einrichtungsindividuelle Anzeigeeinrichtung gemäß einer weiteren vorteilhaften Ausgestaltung der Erfindung derart gesteuert werden, daß mit dem Aktivieren der peripheren Einrichtung ein Dauersignal, im Lade- und Arbeitszustand der peripheren Einrichtung ein Unterbrechungssignal und im Ruhezustand der peripheren Einrichtung die Abschaltung des Dauersignals schaltbar ist und gemäß einer zusätzlichen Ausgestaltung der Erfindung der Ladezustand und der Arbeitszustand der peripheren Einrichtung durch unterschiedliche Zeitfolgen des Unterbrechungssignals markiert werden. Mit diesen Verfahrensschritten sind in einfacher Weise zusätzlich Funktionszustände sichtbar zu machen, die, sofern im Fehlerfall nicht erreicht, Rückschlüsse auf Fehlfunktionen der jeweiligen peripheren Einrichtung zulassen.

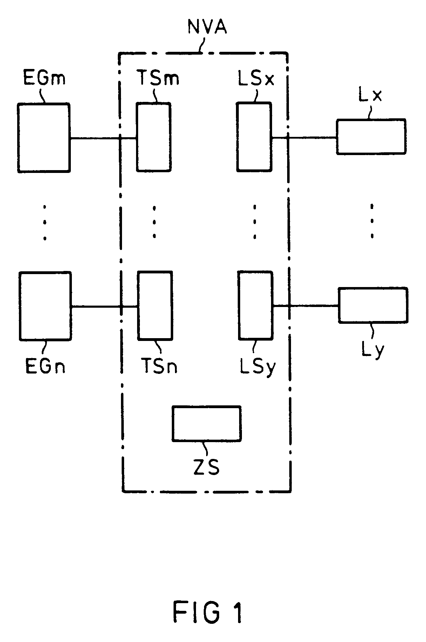

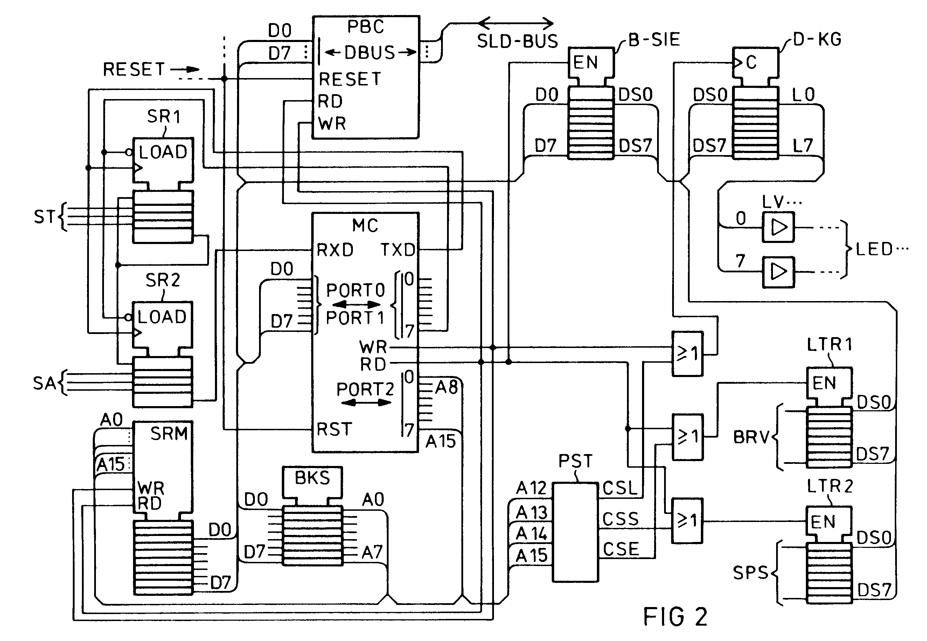

Die Erfindung wird durch ein figürlich dargestelltes Ausführungsbeispiel in zwei Figuren näher erläutert, wobei die Figur 1 die grundsätzliche Anlagenkonfiguration einer Nachrichtenvermittlungsanlage darstellt, während die Figur 2 auszugsweise und lediglich die zum Verständnis der Erfindung notwendigen Schalt- und Steuereinrichtungen von Teilnehmer- und Leitungssätzen der peripheren Einrichtungen erkennen läßt.

Das digital gesteuerte Kommunikationssystem ist durch die Nachrichtenvermittlungsanlage NVA realisiert, deren Endgeräte EGm, EGn mit entsprechenden Teilnehmersätzen TSm, TSn über nicht näher dargestellte Verbindungswege mit Leitungssätzen LSx, LSy und Leitungen Lx, Ly verbunden werden können. Innerhalb der Nachrichtenvermittlungsanlage NVA befindet sich die Zentralsteuerung ZS, die unteranderem den zentralen Datenprozessor enthält.

Die Figur 2 stellt auszugsweise Schalt- und Steuereinrichtungen von Teilnehmer- und Leitungssätzen dar, mit denen das Verfahren zur Identifizierung der peripheren Einrichtungen gesteuert wird. Als wesentliche Schalteinrichtungen sind dabei der Ein-Ausgabeprozessor MC und die Schnittstelleneinrichtung PBC anzusehen, die über den Datenbus DBUS mit den Anschlußleitungen D0 bis D7 untereinander verbunden sind. Mit dem gleichen Datenbus DBUS ist außerdem der Speicher SRM und die bistabile Kippstufe BKS verbunden. Der nicht dargestellte zentrale Datenprozessor und die Schnittstelleneinrichtung PBC korrespondieren in bekannter Weise über sogenannte HDLC-Schnittstellen, die nicht gesondert dargestellt sind.
Der Datenbus DBUS ist außerdem mit dem Bus-Sande/Empfänger B-S/E verbunden, der in Verbindung mit dem D-Kippglied D-KG und den Leitungsverstärkern LV... die Anzeigeeinrichtung LED... steuern. Außerdem sind die Schieberegister SR1, SR2 erkennbar, wobei der Ausgang des ersten Schieberegisters SR1 gleichzeitig auf seinen Eingang und den Eingang des zweiten Schieberegisters SR2 zurückgekoppelt ist. Außerdem ist dargestellt, daß das erste Schieberegister SR1 als Information den Satz-Typ ST übertragen bekommt, während das zweite Schieberegister SR2 die Satz-Adresse SA der jeweiligen peripheren Einrichtung enthält. Der Satz-Typ ST kann beispielsweise durch eine Brückenvariantenschaltung erreicht werden, in dem an die verschiedenen Eingangsleitungen wahlweise unterschiedliches Potential anliegen kann. Die Satz-Adresse SA dagegen wird beim Einstecken der peripheren Einrichtung durch eine gezielte Anordnung von Kontaktstiften für die jeweiligen peripheren Einrichtungen erzeugt. Weiterhin ist angedeutet, daß das Laden und der Zeittakt für die beiden Schieberegister SR1, SR2 durch den Ein-Ausgabeprozessor MC erfolgt, der die Satz-Adresse SA und den Satz-Typ ST von dem jeweiligen Schieberegister SR1, SR2 über die Eingangsleitung RXD übernimmt. Dargestellt ist auch, daß von dem Ein-Ausgabeprozessor MC über die Adressenleitungen A8 bis A15 der Speicher SRM und die Portsteuereinrichtung PST ansteuerbar sind, während die bistabile Kippstufe BKS über die Adressenleitungen A0 bis A7 mit dem Speicher SRM in Verbindung stehen.

Die Portsteuereinrichtung PST, die durch eine Demultiplexeinrichtung realisiert ist, enthält die erste Ausgangsleitung CSL zur Lampensteuerung, die zweite Ausgangsleitung CSS zum Auslesen des jeweiligen Sperrzustandes der peripheren Einrichtung und die dritte Ausgangsleitung CSE, mit der durch Berechtigunsvarianten BRV über den ersten Leitungstreiber LTR1 Zusatzindikatoren, die sich auf die jeweilige periphere Einrichtung beziehen, abgefragt werden können. Der zweite Leitungstreiber LTR2 dient der manuellen Sperrung von peripheren Einrichtungen, wobei an die nicht bezeichneten Eingangsleitungen des zweiten Leitungstreibers LTR2 durch Sperrtasten gezielt ein Sperrpotential SPS angeschaltet werden kann. Um die Leitungsverstärker LV... und dementsprechend die Anzeigeeinrichtungen LED... ansteuern zu können, sind die Informationen über den Datenbus DBUS mit den Anschlußleitungen D0, D7 über den Bus-Sende/Empfänger B-S/E auf die weiteren Anschlußleitungen DS0, DS7 steuerbar, die ihrerseits einen zusätzlichen Datenbus mit dem D-Kippglied D-KG und dem ersten und zweiten Leitungstreiber LTR1, LTR2 bilden.

Mit dem Aktivieren einer peripheren Einrichtung wird also ein Rücksetz-Signal (RESET) erzeugt, das sowohl die Schnittstelleneinrichtung PPC als auch den Ein-Ausgabeprozessor MC in den Ruhezustand zurückversetzt. Wird die periphere Einrichtung unter Spannung gezogen bzw. gesteckt, so wird dieses Rücksetzsignal RESET als sogenannter Hard-Reset an den nicht dargestellten Datenprozessor übertragen, um so ohne Verzug das Vorhandensein bzw. das Nichtvorhanendsein der peripheren Einrichtung innerhalb des Kommunikationssystems zu ermitteln. Zur Identifizierung der peripheren Einrichtung wird nun byteweise durch ein Byte 0 die Satz-Adresse SA über das zweite Schieberegister SR2 und danach mit dem Byte 1 der Satz-Typ ST über das erste und zweite Schieberegister SR1, SR2 über die Eingangsleitung RXD an den Ein-Ausgabeprozessors MC übermittelt. Desweiteren wird durch Byte 2 und 3 die Kapazitätskennung vom Ein-Ausgabeprozessor MC ermittelt und über den Datenbus DBUS der Schnittstellteneinrichtung PBC in bekannter Weise an den nicht dargestellten Datenprozessor übertragen. Der Datenprozessor wertet diese Daten als Speicher-Ladeabrufsignal aus und sendet daraufhin die satzindividuelle Speicher-Ladeinfornation an die periphere Einrichtung zurück. Diese Speicher-Ladeinformation wird über den gleichen Datenbus DBUS der Schnittstelleneinrichtung PBC in den Speicher SRM der jeweiligen peripheren Einrichtung übernommen. Die Aufnahme der Speicher-Ladeinformation wird dann von dem Ein-Ausgabeprozessor MC mit einer Aktiv-Rückmeldeinformation an den zentralen Datenprozessor quittiert. Mit dieser Aktiv-Rückmeldeinformation, die innerhalb des zentralen Datenprozessors gespeichert wird, ist sowohl das räumliche Vorhandensein der peripheren Einrichtung innerhalb des Kommunikationssystems ermittelt als auch deren Funktionstüchtigkeit, so daß diese periphere Einrichtung für die Herstellung von Verbindungen innerhalb des Kommunikationssystems zur Verfügung steht.

Das Aktivieren der peripheren Einrichtung und auch der erfolreiche Abschluß dieses Ladezustandes mit der Aktiv-Rückmeldeinformation ist durch die einrichtungsindividuelle Anzeigeeinrichtung LED... sichtbar zu machen, so daß bestimmte Zustände der peripheren Einrichtung für den Betrachter erkenntlich werden. So kann beispielsweise das Aktivieren der peripheren Einrichtung durch ein Dauersignal angezeigt werden, das im Lade- und Arbeitszustand der peripheren Einrichtung, also während der Korrespondenz mit dem Datenprozessor, durch ein Unterbrechungssignal angezeigt wird, während der Abschluß dieses Ladevorganges, und damit der Ruhezustand der peripheren Einrichtung, durch das Abschalten des Dauersignals erfolgt. Die Taktsteuerung der Schnittstelleneinrichtung PBC und des Ein-Ausgabeprozessors MC wird durch einen zentralen Zeittakt gesteuert, der mit seinen Steuerleitungen nicht dargestellt ist.

## Patentansprüche

1. Verfahren zur Identifizierung von peripheren Einrichtungen innerhalb eines digitalen Kommunikationssystems, insbesondere einer Nachrichtenvermittlungsanlage, mit einem zentralen Datenprozessor als Zentralsteuerung und mit mehreren, als Teilnehmer- und Leitungssatz mit Speicher ausgestatteten die peripheren Einrichtungen steuernde, dezentralen Ein-Ausgabeprozessoren, die jeweils über eine periphere Schnittstelleneinrichtung mit dem zentralen Datenprozessor in Verbindung stehen, wobei für die Identifizierung der Ein-Ausgabeprozessoren bzw. peripheren Schnittstelleneinrichtungen eine Satztypinformation und für die Ansteuerung der Ein-Ausgabeprozessoren bzw. peripheren Schnittstelleneinrichtungen Satzadressen vorgesehen sind,
**gekennzeichnet durch**
die Merkmale
1.1. mit dem Aktivieren einer peripheren Einrichtung wird deren Schnittstelleneinrichtung (PBC) und deren Ein-Ausgabeprozessor (MC) durch ein Rücksetz-Signal (RESET) zurückgesetzt,
1.2. dem Ein-Ausgabeprozessor (MC) wird zur Identifizierung der peripheren Einrichtungen durch ein Byte 0 die Satzadresse (SA), durch ein Byte 1 die Satztypinformation (ST) und durch weitere Bytes 2, 3 eine der peripheren Einrichtung entsprechende Speicherkapazitätskennung übertragen,
1.3. die Satzadresse (SA), die Satztypinformation (ST) und die Speicherkapazitätskennung werden dem zentralen Datenprozessor über den Datenbus (DBUS) der Schnittstelleneinrichtung (PBC) als Speicher-Ladeabrufsignal übertragen,
1.4. das Speicher-Ladeabrufsignal bewirkt im zentralen Datenprozessor das Aussenden einer satzindividuellen Speicher-Ladeinformation, die über den Datenbus (DBUS) zur Schnittstelleneinrichtung (PBC) in den Speicher (SRM) der jeweiligen peripheren Einrichtung übertragbar ist,
1.5. die Speicher-Ladeinformation wird vom jeweiligen dezentralen Ein-Ausgabeprozessor (MC) durch eine im zentralen Datenprozessor speicherbare Aktiv-Rückmeldeinformation quittiert.

2. Verfahren nach Anspruch 1, **gekennzeichnet durch** das Merkmal
2.1. das Aktivieren der peripheren Einrichtung und ein erfolgreicher Abschluß des Ladezustandes mit der Aktiv-Rückmeldeinformation ist durch eine einrichtungsindividuelle Anzeigeeinrichtung (LED...) anzeigbar.

3. Verfahren nach Anspruch 2, **gekennzeichnet durch** das Merkmal
3.1. die einrichtungsindividuelle Anzeigeeinrichtung (LED...) ist durch eine manuelle Sperreinrichtung der jeweiligen peripheren Einrichtung beeinflußbar.

4. Verfahren nach Anspruch 2, **gekennzeichnet durch** das Merkmal
4.1. die einrichtungsindividuelle Anzeigeeinrichtung (LED...) ist derart steuerbar, daß mit dem Aktivieren der peripheren Einrichtung ein Dauersignal, im Lade- und Arbeitszustand der peripheren Einrichtung ein Unterbrechungssignal und im Ruhezustand der peripheren Einrichtung eine Abschaltung des Dauersignals schaltbar ist,

5. Verfahren nach Anspruch 4, **gekennzeichnet durch** das Merkmal
5.1. der Ladezustand und der Arbeitszustand der peripheren Einrichtung sind durch unterschiedliche Zeitfolgen des Unterbrechungssignals markiert.

## Claims

1. Process for identifying peripheral devices within a digital communication system, preferably a message switching system, having a central data processor as central controller and having a plurality of decentralised input/output processors which are equipped with memory as subscriber and line sets, which control the peripheral devices, and which are in communication with the central data processor via a peripheral interface means in each case, record type information being provided for the identification of the input/output processors or peripheral interface means respectively, and record addresses being provided for addressing the input/output processors or peripheral interface means respectively, characterised by the features:
1.1. upon the activation of a peripheral device, its interface means (PBC) and its input/output processor (MC) are reset by a reset signal (RESET),
1.2. for identifying the peripheral devices, the record address (SA) is transmitted by a byte 0, the record type information (ST) is transmitted by a byte 1, and a memory capacity code corresponding to the peripheral device is transmitted by further bytes 2,3 to the input/output processor (MC),
1.3. the record address (SA), the record type information (ST) and the memory capacity code are transmitted to the central data processor via the data bus (DBUS) of the interface means (PBC) as memory load call signal,
1.4. in the central data processor the memory load call signal causes the transmission of record-specific memory load information which can be transmitted via the data bus (DBUS) to the interface means (PBC) into the memory (SRM) of the respective peripheral device,
1.5. the memory load information is acknowledged by the respective input/output processor (MC) by active answerback information that can be stored in the central data processor.

2. Process according to Claim 1, characterised by the feature:
2.1. the activation of the peripheral device and a successful termination of the loading state with the active answerback information can be indicated by a device-specific indicating means (LED...).

3. Process according to Claim 2, characterised by the feature:
3.1. the device-specific indicating means (LED...) can be influenced by a manual inhibit means of the respective peripheral device.

4. Process according to Claim 2, characterised by the feature:
4.1. the device-specific indicating means (LED...) can be controlled in such a way that a continuous signal can be switched when the peripheral device is activated, an interrupt signal can be switched during the loading and operating states of the peripheral device, and the disconnection of the continuous signal can be switched when the peripheral device is in the idle state.

5. Process according to Claim 4, characterised by the feature:
5.1. the loading state and the operating state of the peripheral device are marked by different time sequences of the interrupt signal.

## Revendications

1. Procédé d'identification de dispositifs périphériques dans un système numérique de communication, notamment une installation de commutation d'informations, comportant un processeur central de données en tant qu'unité centrale de commande, et plusieurs processeurs d'entrée-sortie décentralisés qui sont utilisés en tant que joncteurs d'abonnés et joncteurs de circuits à mémoires, qui commandent les dispositifs périphériques, et qui sont en liaison avec le processeur central de données, par l'intermédiaire d'un dispositif périphérique d'interface, du type dans lequel il est prévu une information concernant le type de joncteur pour l'identification des processeurs d'entrée-sortie ou des dispositifs périphériques d'interface, et des adresses de joncteurs pour la commande des processeurs d'entrée-sortie ou des dispositifs périphériques d'interface, caractérisé par le fait :
1.1. qu'à l'aide de l'activation d'un dispositif périphérique, son dispositif d'interface (PBC) et son processeur d'entrée-sortie (MC) sont remis à l'état initial par un signal de remise à l'état initial (RESET),
1.2. que pour l'identification des dispositifs périphériques, on transmet au processeur d'entrée-sortie (MC) les adresses de joncteurs (SA) par un byte 0, l'information (ST) concernant le type de joncteur par un byte 1, et une caractéristique de la capacité de mémoire correspondant au dispositif périphérique par d'autres bytes 2, 3,
1.3. que les adresses (SA) de joncteurs, l'information (ST) concernant le type de joncteur, et la caractéristique en capacité de mémoire sont transmises au processeur central de données, par l'intermédiaire du bus de données (DBUS) du dispositif d'interface (PBC), en tant que signal de demande de la charge de la mémoire,
1.4. que le signal de demande de la charge de la mémoire provoque, dans le processeur central de données, l'émission d'une information, propre à chaque joncteur, de la charge de la mémoire, qui peut être transmise, par l'intermédiaire du bus de données (DBUS), au dispositif d'interface (PBC), dans la mémoire (SRM) du dispositif périphérique respectif,
1.5. que l'information de la charge de la mémoire est reçue avec accusé réception par le processeur respectif et décentralisé d'entrée-sortie (MC), par l'intermédiaire d'une information active d'accusé réception susceptible d'être mémorisée dans le processeur central de données.

2. Procédé suivant la revendication 1, caractérisé par le fait :
2.1. que l'activation du dispositif périphérique et une fin effective de l'état de charge avec information active d'accusé réception, sont susceptibles d'être signalés par l'intermédiaire d'un dispositif individuel de signalisation (LED...).

3. Procédé suivant la revendication 2, caractérisé par le fait :
3.1. que le dispositif individuel de signalisation (LED...) est susceptible d'être influencé par un dispositif manuel de blocage du dispositif périphérique respectif.

4. Procédé suivant la revendication 2, caractérisé par le fait :
4.1. que le dispositif individuel de signalisation (LED...) est susceptible d'être commandé de telle sorte qu'un signal continu est susceptible d'être commuté avec l'activation du dispositif périphérique, qu'un signal d'interruption est susceptible d'être commuté dans l'état de charge et de fonctionnement du dispositif périphérique, et qu'une interruption du signal continu est susceptible d'être commutée dans l'état de repos du dispositif périphérique.

5. Procédé suivant la revendication 4, caractérisé par le fait :
5.1. que l'état de charge et l'état de fonctionnement du dispositif périphérique sont matérialisés par des séquences différentes du signal d'interruption.
